# EUROPÄISCHE PATENTANMELDUNG

(11) **EP 1 505 329 A2**
(43) Veröffentlichungstag der Anmeldung: **09.02.2005**
(21) Anmeldenummer: 04090264.5
(22) Anmeldetag: 29.06.2004
(51) Int. Cl.: F16L 13/14

(54) **Pressverbindung**

(30) Priorität: 07.08.2003 DE 10336727
(71) Anmelder: Geberit Mapress GmbH, 40746 Langenfeld (DE)
(72) Erfinder: Foering, Herbert, 42697 Solingen (DE); Gigowski, Thomas, Dr., 41517 Grevenbroich (DE)
(74) Vertreter: Meissner, Peter E., Dipl.-Ing.

(57) **Zusammenfassung**

Die Erfindung betrifft eine Rohrverbindung, bestehend aus einem metallischen Pressfitting, der mindestens einen im Längsquerschnitt wulstartigen ein Dichtelement aufnehmenden Abschnitt und einen daran anschließenden der Einschubseite zugewandten und/oder der Einschubseite abgewandten zylindrisch ausgebildeten Abschnitt aufweist, der am Ende seiner Erstreckung mit einem einen Anschlag bildenden sickenförmigen Absatz versehen ist und einem Leitungsrohr, dessen glatt ausgebildeter Endbereich nach dem Einschub in den Pressfitting am Absatz zur Anlage kommt. Dabei ist der auch nach der Verpressung zwischen Mantelfläche Leitungsrohr (5) und Innenfläche Pressfitting (1) sich ergebende ringförmige Spalt (9) durch ein im Einschubbereich aufgebrachtes Mittel verschlossen.

## Beschreibung

Die Erfindung betrifft eine Rohrverbindung bestehend aus einem metallischen Pressfitting und einem darin einschiebbaren Leitungsrohr gemäß dem Oberbegriff des Patentanspruches 1.

Das Pressfitting-System für die Heizungsinstallation aus C-Stahl und für die Trinkwasserinstallation aus hochlegiertem Stahl und Kupfer ist bekannt (s. Prospekt Mapress GmbH, Lieferprogramm 4/2001).

Das bekannte System besteht im Wesentlichen aus einem plastisch verformbaren metallischen Fittingelement, das je nach Anwendungsbereich als Bogen- oder T-Stück, Muffe oder Übergangsstück ausgebildet oder mit einer Anschlussverschraubung versehen ist.

Der Pressfitting weist mindestens einen im Längsquerschnitt wulstartigen ein Dichtelement aufnehmenden Abschnitt auf. An den Ringwulst schließt sich ein sich in Längsrichtung erstreckender zylindrisch ausgebildeter Abschnitt an, in den das Leitungsrohr eingeschoben wird.

Am Ende der Erstreckung dieses zylindrischen Bereiches ist ein radial nach innen sich erstreckender sickenförmiger Absatz angebracht, der als Anschlag für das einschiebbare glattendige Leitungsrohr dient.

Mittels eines mindestens zwei Pressbacken aufweisenden Presswerkzeuges wird der Ringwulst plastisch und das Dichtelement elastisch verformt. Zusätzlich wird mit dem selben Pressvorgang im zylindrischen Bereich des Pressfittings eine sickenförmige Vertiefung angepresst, die auch das darunter liegende eingeschobene Leitungsrohr mit erfasst Das elastisch verformte Dichtelement übernimmt bei diesem Verbindungssystem die Dichtfunktion, während die angepresste sickenförmige Vertiefung, die durch den Innendruck entstehenden Längskräfte aufnimmt.

Bei diesem bekannten System ist von Nachteil, dass in dem auch nach der Verpressung verbleibenden Ringspalt zwischen dem eingeschobenen Leitungsrohr und dem Pressfitting die Konzentration der in dem zu transportierenden Medium gelösten unerwünschten Stoffe überproportional ansteigt.

Auch ist nicht auszuschließen, dass sich in diesem Ringspalt unerwünschte Bakterienkulturen festsetzen können, die bei einer Durchspülung nicht erfasst werden und somit ins Trinkwasser gelangen könnten.

Aufgabe der Erfindung ist es, eine Rohrverbindung anzugeben, die die geschilderten Nachteile vermeidet.

Diese Aufgabe wird ausgehend vom Oberbegriff in Verbindung mit dem kennzeichnenden Teil des Anspruches 1 gelöst. Vorteilhafte Weiterbildungen sind jeweils Gegenstand von Unteransprüchen.

Nach der Lehre der Erfindung ist auch der nach der Verpressung zwischen Mantelfläche Leitungsrohr und Innenfläche Pressfitting sich ergebende ringförmige Spalt durch ein im Einschiebebereich aufgebrachtes Mittel verschlossen.

In einer ersten Ausführungsform ist am stirnseitigen Ende des Leitungsrohres ein Dichtelement angeordnet, das nach dem Einschub abdichtend am Absatz zur Anlage kommt. Vorzugsweise ist das Dichtelement als Dichtringkappe ausgebildet und weist auf der Spaltseite eine Querschnittsdicke von 0,3 bis 1 mm auf.

Zur Sicherstellung der Dichtwirkung der Kappe wird außerdem vorgeschlagen, dass die Kappe in der Nähe der plastischen Verformung des zylindrischen Abschnittes des Pressfittings liegt. Auf diese Weise wird die Dichtringkappe partiell mit verformt und zwischen Pressfitting und Leitungsrohr zusammen gepresst.

Bei einer zweiten Ausführungsform ist der zwischen der Stelle der plastischen Verformung des zylindrischen Abschnittes und dem sickenförmigen Absatz liegende Abschnitt des Pressfittings in Einschieberichtung im Durchmesser sich verjüngend ausgebildet. Vorzugsweise bildet die Durchmesserverringerung einen Kegel, ebenso kann sie aber auch trompetenförmig ausgebildet sein.

Beim Einschieben des Leitungsrohres in den Pressfitting wird durch Aufbringen einer gewissen Axialkraft die Stirnseite des Leitungsrohrendes so gegen den Kegel geschoben, dass sich Stirnfläche und Pressfitting auf dem gesamten Umfang berühren und somit spaltfrei sind.

Um diesen Effekt noch zu verstärken wird außerdem vorgeschlagen, die Stirnfläche des Leitungsrohres außen anzufasen, um dadurch eine größere Kontaktfläche zu erzielen. Ebenso ist es denkbar, den Endbereich des Leitungsrohres ebenfalls konisch auszubilden. Dabei sollte die Kegelneigung des Leitungsrohrabschnittes mindestens so groß sein, wie die des Pressfittingabschnittes. Sie kann sogar etwas größer sein, um den Kontaktflächendruck und damit den Abdichteffekt zu erhöhen. Den gleichen Abdichteffekt kann man auch mit gekrümmten gegeneinander gepressten Flächen erreichen.

Eine weitere Ausführungsform ist dadurch gekennzeichnet, dass die Innenfläche des Pressfittings im Einschiebebereich aber außerhalb des Einwirkbereiches der Pressbacken mit einer Folie bedeckt ist. Um bei der Montage ein versehentliches Abstreifen der Folie zu verhindern, wird darüber hinaus vorgeschlagen zwischen Innenfläche Pressfitting und Folie eine Klebeschicht vorzusehen. Vorzugsweise liegt die Dicke der Folie im Bereich von 0,1 bis 0,3 mm.

Bei einer weiteren Ausführungsform ist vor dem Einschub das Leitungsrohrende entlang des Einschiebebereiches aber außerhalb des Einwirkbereiches der Pressbacken mit einer Paste versehen. Nach dem Verpressen füllt die Paste den Spaltraum und erhöht unter Umständen nach Aushärtung die übertragbare Axiallast zwischen Pressfitting und Leitungsrohr.

Weitere Merkmale, Vorteile und Einzelheiten der Erfindung ergeben sich aus der nachfolgenden Beschreibung von einem in einer Zeichnung dargestellten Ausführungsbeispiel.

Es zeigt:
- **Figur 1**: einen halbseitigen Längsschnitt durch eine erste Ausführungsform einer erfindungsgemäßen Rohrverbindung nach dem Einschieben des Leitungsrohres aber vor der Verpressung,
- **Figur 2**: wie Figur 1 aber nach der Verpressung,
- **Figur 3**: wie Figur 1, aber eine zweite Ausführungsform vor der Verpressung,
- **Figur 4**: wie Figur 3, aber mit angepasstem Leitungsrohr,
- **Figur 5**: wie Figur 1, aber eine dritte Ausführungsform vor der Verpressung,
- **Figur 6**: wie Figur 5, aber mit angepasstem Leitungsrohr,
- **Figur 7**: wie Figur 1, aber eine vierte Ausführungsform vor der Verpressung,
- **Figur 8**: wie Figur 7, aber nach der Verpressung.

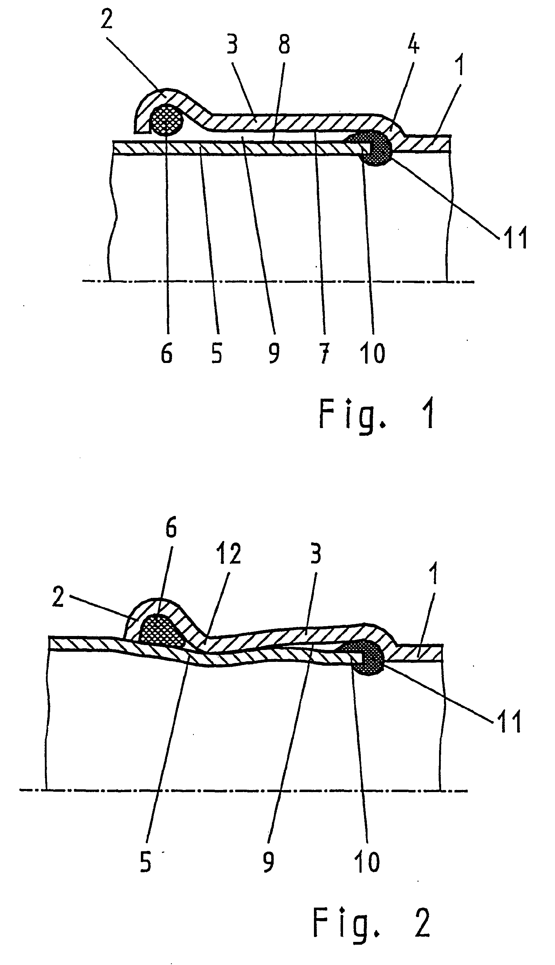

In **Figur 1 und 2** ist ein hälftiger Längsschnitt einer ersten Ausführungsform der erfindungsgemäßen Rohrverbindung dargestellt Es zeigt einen verformbaren metallischen Pressfitting 1, wobei dieses dargestellte Teilstück Element eines Bogens, eines T-Stückes, einer Muffe oder eines Reduzierstückes sein kann.

Der Pressfitting 1 weist ein im Querschnitt hakenförmig und wulstartig ausgebildetes Ende 2 auf, an das sich ein in Längsrichtung erstreckender zylindrisch ausgebildeter Bereich 3 anschließt. Am Ende der Längserstreckung des zylindrisch ausgebildeten Bereiches 3 ist ein radial nach innen sich erstreckender sickenförmiger Absatz 4 angeformt, der als Anschlag für das einzuschiebende Leitungsrohr 5 dient. Im wulstartig ausgebildeten Ende 2 ist ein Dichtring 6 angeordnet, der nach der Verpressung für die notwendige Abdichtung zwischen Leitungsrohr 5 und Pressfitting 1 sorgt.

Zur Verdeutlichung ist stark übertrieben zwischen der Innenfläche 7 des zylindrischen Teiles 3 des Pressfittings 1 und der Außenfläche 8 des eingeschobenen Leitungsrohres 5 ein Ringspalt 9 zu erkennen.

In diesen Ringspalt 9 kann auch nach der Verpressung, wie Figur 2 zeigt, Flüssigkeit eindringen. Um dies zu verhindern ist erfindungsgemäß am stimseitigen Ende 10 des eingeschobenen Leitungsrohres 5 eine auf dieses Ende aufsteckbare Dichtringkappe 11 angeordnet Dabei beträgt die Querschnittsdicke der Dichtringkappe 11 im Spaltbereich nur einige Zehntel Millimeter. Sie soll aber auf jeden Fall mindestens so groß sein wie die sich ergebende maximale Spaltbreite bei Überlappung der ungünstigsten Toleranzen, d. h. großer Innendurchmesser für den Pressfitting 1 kombiniert mit kleinem Außendurchmesser für das eingeschobene Leitungsrohr 5.

**Figur 2** zeigt deutlich, dass nach der Verpressung der Ringspalt 9 abgedichtet ist und keine Flüssigkeit mehr in diesen Raum eindringen kann. Um die Abdichtung auch bei kleinen Relativverschiebungen des Leitungssystems sicherzustellen, wird die Dichtringkappe 11 in die Nähe des Verpressbereiches 12 des zylindrischen Teiles 3 des Pressfittings 1 gelegt. Geschieht das in der geschilderten Weise, dann wirkt sich der Verpressvorgang im zylindrischen Teil auch partiell auf die Dichtringkappe 11 im Sinne einer sehr guten und sicheren Abdichtung aus.

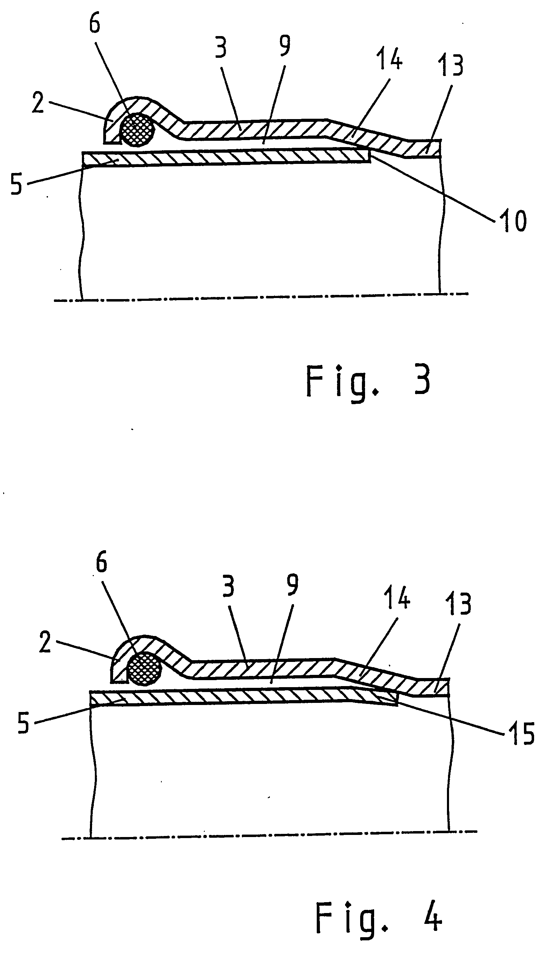

Im Unterschied zur Ausführungsform gemäß Figur 1 ist in Figur 3 der Pressfitting 13 im Anschluss an den zylindrisch ausgebildeten Abschnitt 3 mit einem sich im Durchmesser verjüngenden Abschnitt versehen. In diesem Ausführungsbeispiel ist dieser Abschnitt 14 als Kegel ausgebildet.

Wird nun das Leitungsrohr 5 unter axialer Kraft in den Pressfitting 13 eingeschoben, dann kommt das stimseitige Ende 10 an der Kegelfläche abdichtend zur Anlage, so dass der noch verbliebene Ringspalt 9 verschlossen ist.

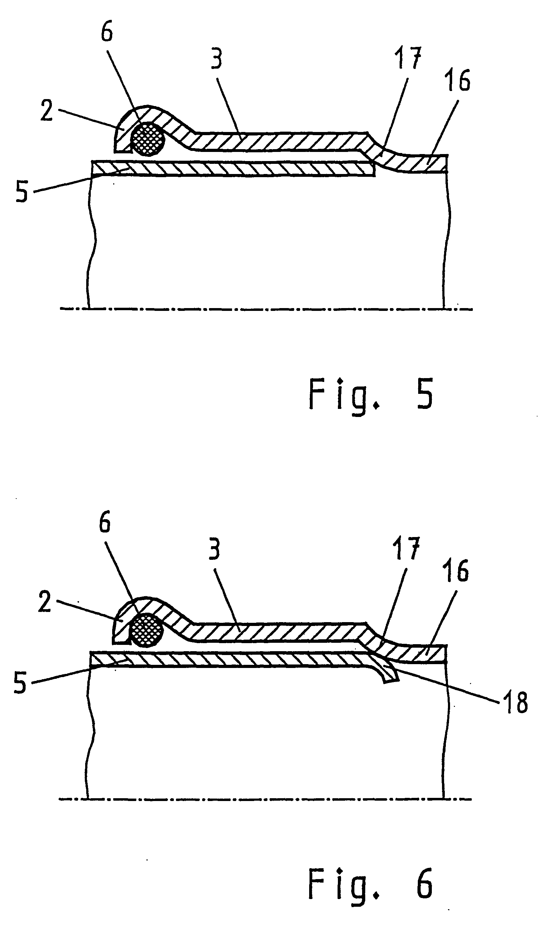

In Abwandlung dazu ist in **Figur 4** dargestellt, ein Leitungsrohr 5 mit einem konisch ausgebildeten Endbereich 15 zu versehen. Dabei ist zu beachten, dass die Kegelneigung dieses Endbereiches 15 das Leitungsrohr 5 höchstens so groß ist wie die des betreffenden Abschnittes 14 des Pressfittings 13. Vorteilhafter ist die Kegelneigung des Endbereiches 15 des Leitungsrohres 5 etwas geringer, so dass der Kontaktflächendruck ansteigt und somit der Abdichteffekt vergrößert wird.

Eine weiter Variante ist in den **Figuren 5 und 6** dargestellt. Im Unterschied zu **Figur 3** ist der betreffende Abschnitt 17 des Pressfittings 16 ebenfalls im Durchmesser sich verjüngend ausgebildet, aber entlang einer gekrümmten Linie und nicht einer Geraden. Vorzugsweise entspricht die Krümmung einem Ellipsenabschnitt.

Eine Abwandlung zeigt **Figur 6.** In diesem Ausführungsbeispiel ist der Endbereich 18 des Leitungsrohres 5 ebenfalls in gekrümmter Weise sich verjüngend ausgebildet.

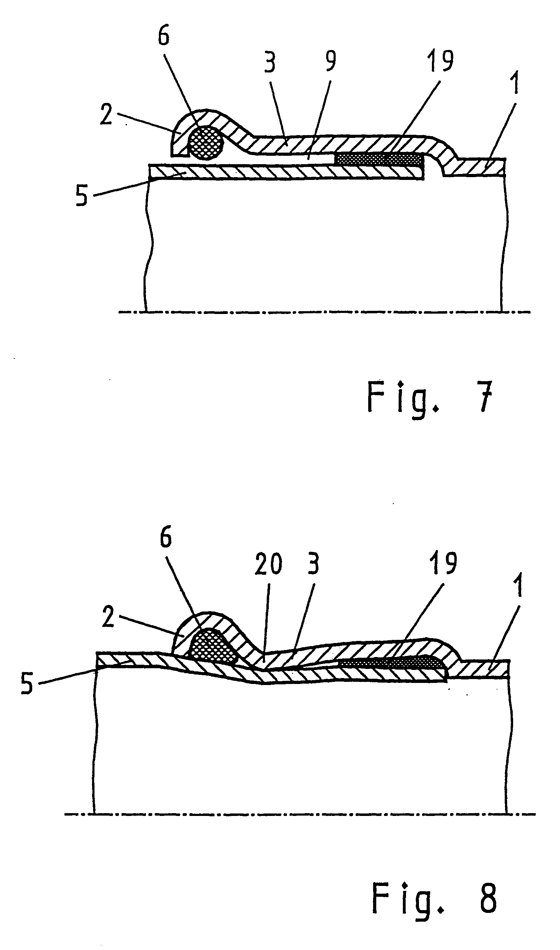

**Figur 7** zeigt eine Ausführungsform, bei der im Einschiebebereich aber außerhalb des Wirkbereiches der Pressbacken zwischen der Außenfläche des Leitungsrohrs 5 und der Innenfläche des Pressfittings 1 eine dünne Folie 19 angeordnet ist. Zur Kenntlichmachung ist sie hier übertrieben dick dargestellt. Diese Folie 19 deckt im kritischen Bereich den Ringspalt 9 ab, so dass keine Flüssigkeit eindringen kann.

**Figur 8** zeigt die Rohrverbindung nach der Verpressung. Wie aus dem Stand der Technik bekannt, wird nicht nur das hakenförmige Ende 2 des Pressfittings 2 radial zusammengedrückt und somit der Dichtring 6 komprimiert, sondern es wird daneben eine sickenförmige Vertiefung 20 angeformt, um das darunter liegende Leitungsrohr 5 axial zu sichern. Um den Reibbeiwert hoch zu halten, ist die Folie 19 außerhalb der axialen Sicherung angeordnet.

### Bezugszeichenliste

| **Nr.** | **Bezeichnung** |
|---|---|
| 1 | Pressfitting |
| 2 | hakenförmig, wulstartiges Ende Pressfitting |
| 3 | zylindrischer Teil Pressfitting |
| 4 | sickenförmiger Absatz |
| 5 | Leitungsrohr |
| 6 | Dichtring |
| 7 | Innenfläche zylindrischer Teil |
| 8 | Außenfläche Leitungsrohr |
| 9 | Ringspalt |
| 10 | stirnseitiges Ende Leitungsrohr |
| 11 | Dichtringkappe |
| 12 | Verpressbereich |
| 13 | Pressfitting |
| 14 | Abschnitt mit Kegel |
| 15 | Endbereich Leitungsrohr |
| 16 | Pressfitting |
| 17 | Abschnitt mit Krümmung |
| 18 | Endbereich Leitungsrohr |
| 19 | Folie |
| 20 | sickenförmige Vertiefung |

## Patentansprüche

1. Rohrverbindung, bestehend aus einem metallischen Pressfitting, der mindestens einen im Längsquerschnitt wulstartigen ein Dichtelement aufnehmenden Abschnitt und einen daran anschließenden der Einschubseite zugewandten und/oder der Einschubseite abgewandten zylindrisch ausgebildeten Abschnitt aufweist, der am Ende seiner Erstreckung mit einem einen Anschlag bildenden sickenförmigen Absatz versehen ist und einem Leitungsrohr, dessen glatt ausgebildeter Endbereich nach dem Einschub in den Pressfitting am Absatz zur Anlage kommt, um mittels eines den Pressfitting umfassenden mindestens zwei Pressbacken aufweisenden Presswerkzeuges eine unlösbare dichte Rohrverbindung zu bilden, wobei während des Verpressens die Pressbacken sowohl auf den Ringwulst einschließlich des darin eingelegten Dichtelementes als auch auf den zylindrisch ausgebildeten Abschnitt des Pressfittings einwirken
**dadurch gekennzeichnet;**
**dass** der auch nach der Verpressung zwischen der Mantelfläche des Leitungsrohrs (5) und der Innenfläche des Pressfittings (1) sich ergebende ringförmige Spalt (9) durch ein im Einschubbereich aufgebrachtes Mittel verschlossen ist.

2. Rohrverbindung nach Anspruch 1
**dadurch gekennzeichnet,**
**dass** am stirnseitigen Ende (10) des einschiebbaren Leitungsrohres (5) ein Dichtelement angeordnet ist, das nach dem Einschub abdichtend am Absatz (4) zur Anlage kommt.

3. Rohrverbindung nach Anspruch 2
**dadurch gekennzeichnet,**
**dass** das Dichtelement als eine auf das stirnseitige Ende (10) des Leitungsrohres (5) aufsteckbare Dichtringkappe (11) ausgebildet ist.

4. Rohrverbindung nach Anspruch 2 und 3
**dadurch gekennzeichnet,**
**dass** die Querschnittsdicke des Dichtelementes auf der Spaltseite im Bereich von 0,3 bis 1 mm liegt.

5. Rohrverbindung nach den Ansprüchen 1 - 4
**dadurch gekennzeichnet,**
**dass** bei der Verpressung das stirnseitig am Leitungsrohrende angeordnete Dichtelement in der Nähe der plastischen Verformung des zylindrischen Teiles (3) des Pressfittings (1) liegt.

6. Rohrverbindung nach Anspruch 1
**dadurch gekennzeichnet,**
**dass** der zwischen der Stelle der plastischen Verformung des zylindrischen Teiles (3) und dem sickenförmigen Absatz (4) liegende Abschnitt des Pressfittings (1) in Einschieberichtung sich im Durchmesser verringernd ausgebildet ist.

7. Rohrverbindung nach Anspruch 6
**dadurch gekennzeichnet,**
**dass** die Durchmesserverringerung im Längsquerschnitt gerade ist.

8. Rohrverbindung nach Anspruch 6
**dadurch gekennzeichnet,**
**dass** die Durchmesserverringerung im Längsquerschnitt gekrümmt ist.

9. Rohrverbindung nach Anspruch 8
**dadurch gekennzeichnet,**
**dass** die Krümmung elliptisch ist.

10. Rohrverbindung nach den Ansprüchen 6 - 9
**dadurch gekennzeichnet,**
**dass** die Stirnfläche des Leitungsrohrendes angefast ist.

11. Rohrverbindung nach Anspruch 7
**dadurch gekennzeichnet,**
**dass** der Endbereich (15) des Leitungsrohres (5) konisch verjüngt ausgebildet ist, wobei die Kegelneigung mindestens so groß ist wie die des konisch ausgebildeten Abschnittes (14) des Pressfittings (13).

12. Rohrverbindung nach Anspruch 8
**dadurch gekennzeichnet,**
**dass** der Endbereich (18) des Leitungsrohres (5) gekrümmt verjüngend ausgebildet ist.

13. Rohrverbindung nach Anspruch 1
**dadurch gekennzeichnet,**
**dass** die Innenfläche des Pressfittings (1) im Einschiebebereich außerhalb des Einwirkbereiches der Pressbacken mit einer Folie (19) bedeckt ist.

14. Rohrverbindung nach Anspruch 13
**dadurch gekennzeichnet,**
**dass** zwischen Innenfläche Pressfitting und Folie (19) eine Klebeschicht vorgesehen ist.

15. Rohrverbindung nach Anspruch 13 und 14
**dadurch gekennzeichnet,**
**dass** die Dicke der Folie (19) im Bereich von 0,1 bis 0,3 mm liegt.

16. Rohrverbindung nach Anspruch 1
**dadurch gekennzeichnet,**
**dass** das Leitungsrohrende vor dem Einschub entlang des Einschiebebereiches aber außerhalb des Einwirkbereiches der Pressbacken mit einer Paste versehen ist.

17. Rohrverbindung nach Anspruch 16
**dadurch gekennzeichnet,**
**dass** die Paste aus einem aushärtenden Material besteht.
